# EUROPEAN PATENT APPLICATION

(11) **EP 3 851 500 A1**
(43) Date of publication of application: **21.07.2021**
(21) Application number: 20218018.8
(22) Date of filing: 31.12.2020
(51) Int. Cl.: C09D 11/50, C09D 11/104, C09D 11/037, C09D 11/106

(54) **INK COMPOSITION AND METHOD OF PRINTING INK**

(30) Priority: 14.01.2020 US 202016742682
(71) Applicant: Xerox Corporation, Webster, NY 14580 (US)
(72) Inventor: CLARIDGE, Robert, Cambridge, Ontario N3C 3M7 (CA); CHOPRA, Naveen, Oakville, Ontario L6H 5W6 (CA); ABRAHAM, Biby Esther, Mississauga, Ontario L5M 7E2 (CA)
(74) Representative: Grünecker Patent- und Rechtsanwälte PartG mbB

(57) **Abstract**

An embodiment of the present disclosure is directed to an ink composition. The ink composition comprises at least one water dissipatible sulfonated polyester, at least one polymer additive, at least one colorant chosen from a photochromic colorant and a fluorescent colorant, at least one surfactant, at least one humectant and water.

## Description

### DETAILED DESCRIPTION

### Field of the Disclosure

The present disclosure is directed to ink compositions and methods for printing the inks.

### Background

Typical lithographic and offset printing techniques utilize plates that are permanently patterned, and are, therefore, useful only when printing a large number of copies of the same image, such as magazines, newspapers, and the like. Variable data digital lithography, also referred to herein as digital offset printing, has been developed as a system that uses a non-patterned re-imageable surface, which is initially uniformly coated with a dampening fluid layer. Regions of the dampening fluid are removed by exposure to a focused radiation source (e.g., a laser light source) to form pockets. A temporary pattern in the dampening fluid is thereby formed over the non-patterned re-imageable surface. Ink applied thereover is retained in the pockets formed by the removal of the dampening fluid. The inked surface is then brought into contact with a substrate, such as paper, plastic or metal and the ink transfers from the pockets in the dampening fluid layer to the substrate. The dampening fluid may then be removed, a new uniform layer of dampening fluid applied to the re-imageable surface, and the process repeated.

An exemplary digital offset printing system 100 having a re-imageable surface is shown in FIG. 1. The details of the printing system 100 are described in U.S. Patent Application No. 13/095,714 ("714 Application"), entitled "Variable Data Lithography System," filed on April 27, 2011, now published as U.S. Patent Application Publication No 2012/0103212, by Timothy Stowe et al., which is commonly assigned, and the disclosure of which is hereby incorporated by reference herein in its entirety.

Digital offset printing systems use offset-type inks that are specifically designed and optimized to be compatible with the materials the ink is in contact with, including the re-imageable surface and the dampening solution, as well as with the various subsystems used during the printing process to enable high quality digital printing at high speed. For example, an inker subsystem may be used to apply a uniform layer of ink over the layer of dampening fluid. The inker subsystem may use an anilox roller to meter the ink onto one or more ink forming rollers that are in contact with the re-imageable surface. The ink used with this subsystem should have a viscosity that is not so high that anilox-take up and delivery to the re-imageable surface is difficult. However, too low of a viscosity, tack and/or poor cohesion may result in the ink crawling out of the ink loader, resulting in unwanted spills, loss of ink and potential contamination of the printer. Accordingly, digital offset inks should have a certain range of viscosity, tack and tack stability to afford sufficient and predictable ink cohesion to enable good transfer properties in and among the various subsystems.

Digital offset printing inks differ from conventional inks because they must meet demanding rheological requirements imposed by the lithographic printing process while being compatible with system component materials and meeting the functional requirements of sub-system components, including wetting and transfer.

While currently available ink compositions may be suitable for their intended purposes, a need remains for improved digital offset printing inks, in particular, digital offset printing inks that are free of curable monomers, for example ultra-violet (UV) curable monomers, where the risk of migration of UV ink components limits the use of such UV inks for applications such as food packaging. A need also remains for waterborne digital offset printing inks that have a desirable viscosity for digital offset printing and that do not require significant water evaporation. Further a need remains for digital offset printing inks exhibiting desirable inking from the anilox delivery system, wetting to the blanket substrate, and blanket transfer to the print substrate (for example paper or film). Further a need remains for digital offset inks that have fluorescent or photochromic properties that can be used, for example, for package and document security.

### SUMMARY

An embodiment of the present disclosure is directed to an ink composition. The ink composition comprises at least one water dissipatible sulfonated polyester, at least one polymer additive, at least one colorant chosen from a photochromic colorant and a fluorescent colorant, at least one surfactant, at least one humectant and water.

Another embodiment of the present disclosure is directed to a method for digital offset printing. The method comprises applying a dampening fluid layer to an imaging member surface, patterning the dampening fluid layer to selectively form a latent image, developing the latent image to form an ink image by applying an ink composition over the latent image; and transferring the ink image to a printable substrate. The ink composition comprises at least one water dissipatible sulfonated polyester, at least one polymer additive, at least one colorant chosen from a photochromic colorant and a fluorescent colorant, at least one surfactant, at least one humectant and water.

It is to be understood that both the foregoing general description and the following detailed description are exemplary and explanatory only and are not restrictive of the present teachings, as claimed.

### BRIEF DESCRIPTION OF THE DRAWINGS

The accompanying drawings, which are incorporated in and constitute a part of this specification, illustrates embodiments of the present teachings and together with the description, serve to explain the principles of the present teachings.
FIG. 1 shows a digital offset printing architecture, according to an example of the present disclosure.
FIG. 2 shows a flowchart of a method of printing, according to an embodiment of the present disclosure.
FIG. 3 shows a graph of Viscosity Overlay of Photochromic Waterborne DALI Inks (red, green, blue) discussed in the examples of the present disclosure.
FIG. 4 shows draw down coatings of inks described in the examples of the present disclosure.
FIG. 5 shows offset printing results for ink compositions described in the examples of the present disclosure.
FIGS. 6A and 6B show the fluorescence of ink compositions described in the examples of the present disclosure.
FIG 7 shows labels coated with fluorescent DALI Ink, according to an example of the present disclosure. The inks are invisible under standard room conditions (left) and become visible under UVA (centre) and UVB (right) radiation. Inks return to colourless state immediately after UV source is removed.

It should be noted that some details of the figure have been simplified and are drawn to facilitate understanding of the embodiments rather than to maintain strict structural accuracy, detail, and scale.

### DESCRIPTION OF THE EMBODIMENTS

Reference will now be made in detail to embodiments of the present teachings, examples of which are illustrated in the accompanying drawings. In the drawings, like reference numerals have been used throughout to designate identical elements. In the following description, reference is made to the accompanying drawing that forms a part thereof, and in which is shown by way of illustration a specific exemplary embodiment in which the present teachings may be practiced. The following description is, therefore, merely exemplary.

Waterborne digital offset ink compositions are disclosed that comprise a combination of highly sulfonated polyester resin and fluorescent pigments or dyes for use in security/anti-counterfeit applications. The inks are clear white to clear under room light and fluoresce strongly under UV irradiation. The ink enables fast (offset), customized (digital) printing of security features for packaging, labels and documents. The fluorescent pigments or dyes employed are compatible with the digital offset printing ink so as to preserve, among other things, the inking and transfer properties.

### INK COMPOSITION

Waterborne digital offset printing ink compositions comprising at least one water dissipatible sulfonated polyester; at least one polymer additive; at least one colorant chosen from a photochromic colorant and a fluorescent colorant; at least one surfactant; at least one humectant; and water are described herein. The ink compositions can achieve desired properties for inking, release and/or image permanence. Digital offset printing curable inks are designed to meet specific sub-system requirements that are unique to digital offset printing architecture. These requirements include wetting and release properties from the offset plate used for digital offset lithography printing processes and compatibility with non-aqueous fountain fluid options. Another requirement is adequate function within the ink delivery system (anilox roll). The aqueous ink compositions disclosed herein demonstrate good inking from the anilox delivery system, wetting to the blanket substrate, and blanket transfer to the print substrate (for example, paper or film). The use of a nitrile latex additive enables the formation of a highly robust film surpassing previous waterborne digital offset lithography ink image permanence.

The ink compositions can be used for any suitable or desired purpose. In embodiments, the ink compositions herein are particularly suitable for digital offset lithography printing, in embodiments, for printing labels such as security labels, packaging, and in particular for food grade (e.g., food safe) and medical grade printing of such labels and packaging for food or medical product applications. In embodiments, the ink herein is suitable for use as an undercoat in a printing process.

The ink compositions may include water-dissipatible sulfopolyester materials for the polymer matrix, with a polymer additive to increase internal cohesion. Without wishing to be bound by theory, inclusion of the present polymer additive, which in embodiments, comprises a compound selected from the group consisting of styrene-butadiene, acrylonitrile-butadiene, acrylonitrile-butadiene-styrene, styrene-acrylic and combinations thereof, is believed to enable 100% ink transfer from the central imaging cylinder, and impart robustness to the final print. Formulations may include water dispersible pigment dispersions in order to achieve cyan, magenta, yellow, and black (CMYK) coloured inks, as well as covering specialty colours.

In embodiments, an aqueous ink composition herein comprises at least one water dissipatible sulfonated polyester; at least one polymer additive; at least one colorant chosen from a photochromic colorant and a fluorescent colorant; at least one surfactant; at least one humectant; and water.

It is advantageous to ensure inking uniformity and delivery of the ink from the ink loader system (or inker unit) and that the ink has relatively low viscosity within a temperature range of, in embodiments, from about 45 to about 80 °C, such as from about 50 to about 70 °C, such as from about 55 to about 65 °C, such as about 60 °C, at shear rates corresponding to the equivalent angular frequencies from about 50 to about 200 rad/s such as about 100 rad/s. It is also highly advantageous to ensure a high degree of ink transfer from the anilox roller to the blanket such that the ink has relatively high viscosity within a temperature range of, in embodiments, from about 18 to about 35 °C, such as from about 18 to about 30 °C, such as about 25 °C, at shear rates corresponding to the equivalent angular frequencies from about 0.5 to about 2 rad/s such as about 1 rad/s.

In embodiments, the ink composition has a first viscosity of from about 3,000 to about 90,000 centipoise at an ink take up temperature of from about 45 °C to about 80 °C; and the ink composition has a second viscosity of from about 100,000 to about 2,000,000 centipoise at an ink transfer temperature of from about 18 °C to about 30 °C.

In embodiments, the ink composition has a first viscosity of from about 3,000 to about 90,000 centipoise at an ink take up temperature of from about 45 °C to about 80 °C and a relatively higher shear rate of from about 50 rad/s to about 200 rad/s; and the ink composition has a second viscosity of from about 100,000 to about 2,000,000 centipoise at an ink transfer temperature of from about 18 °C to about 30 °C and a relatively lower angular frequency of from about 0.5 rad/s to about 2 rad/s.

In order to meet digital offset printing requirements, the ink desirably possesses many physical and chemical properties. The ink is desirably compatible with materials it is in contact with, including printing plate, fountain solution, and other cured or non-cured inks. It also desirably meets functional requirements of the sub-systems, including wetting and transfer properties. Transfer of the imaged inks is challenging, as the ink desirably possesses the combination of wetting and transfer traits, that is, the ink desirably at once wets the blanket material homogeneously, and transfers from the blanket to the substrate. Transfer of the image layer is desirably efficient, desirably at least as high as 90%, as the cleaning sub-station may only be capable of eliminating small amounts of residual ink. Any ink remaining on the blanket after cleaning can result in an unacceptable ghost image appearing in subsequent prints.

In embodiments, the ink composition herein has the characteristic of providing substantially 100 percent transfer from the re-imageable imaging member surface to the printable substrate.

### POLYMER ADDITIVE

In embodiments, the ink compositions herein include water-dissipatible sulfopolyester materials as a polymer matrix, with a polymer additive, in embodiments, with a polymer additive provided in the form of a polymer dispersion. Without wishing to be bound by theory, it is believed that the polymer additive, alone, or in combination with the sulfopolyester, increases internal cohesion and enables 100 percent ink transfer from the central imaging cylinder.

The ink compositions herein include a polymer additive, in embodiments, a polymer additive provided in the form of a polymer latex, a polymer dispersion, or a polymer emulsion, wherein the polymer additive comprises a compound selected from the group consisting of styrene-butadiene, acrylonitrile-butadiene, acrylonitrile-butadiene-styrene, styrene-acrylic and combinations thereof.

As used herein, the term "dispersion" means a two phase system where one phase is comprised of finely divided particles (often in the colloidal size range) distributed throughout a bulk substance, the particles being the dispersed or internal phase and the bulk substance being the continuous or external phase. The bulk system is often an aqueous system.

In embodiments, the polymer additive is provided in the form of a dispersion. The polymer additive dispersions may include any suitable or desired percent solids in water. In embodiments, the polymer additive dispersions comprise from about 30 to about 60 percent solids, or from about 33 to about 54 percent solids, or from about 43 to about 49 percent solids.

The polymer additive may be carboxylated or noncarboxylated. In embodiments, the polymer additive comprises a compound selected from the group consisting of carboxylated styrene-butadiene, carboxylated acrylonitrile-butadiene, carboxylated acrylonitrile-butadiene-styrene, noncarboxylated styrene-butadiene, noncarboxylated acrylonitrile-butadiene, noncarboxylated acrylonitrile-butadiene-styrene, and combinations thereof.

In embodiments, the polymer additive comprises acrylonitrile-butadiene. The acrylonitrile-butadiene may be selected from those having a high, medium, or low nitrile content. In embodiments, the polymer additive is an acrylonitrile-butadiene having a high acrylonitrile content, in embodiments, of from 45 mol % acrylonitrile or greater, such as about 50 mol % to about 85 mol%. In other embodiments, the polymer additive is an acrylonitrile-butadiene having a medium acrylonitrile content, in embodiments, of 20% to 45%, such as about 25% to about 40%, such as about 32 percent acrylonitrile. In other embodiments, the polymer additive is an acrylonitrile-butadiene having a low acrylonitrile content, in embodiments, such as less than 20% percent acrylonitrile, such as about 2% to about 18%,.

In embodiments the polymer additive comprises acrylonitrile-butadiene-styrene wherein the ratio of component acrylonitrile, butadiene and styrene may be about 15 to about 35 percent, about 5 to about 30 percent, and about 40 to about 60 percent, respectively.

In embodiments, any suitable or desired polymer additive as described herein can be selected for the present ink compositions. In certain embodiments, the polymer additive comprises a waterborne emulsion of acrylonitrile-butadiene, acrylonitrile-butadiene-styrene, or styrene-butadiene. Examples of commercially available butadiene acrylonitrile, acrylonitrile-butadiene-styrene, and styrene-butadiene dispersions include Nychem® 1578x1 available from Emerald Performance Materials®. Nychem® 1578x1 is a carboxylated butadiene acrylonitrile polymer latex with a high nitrile content. This material is well-known for its toughness and abrasion resistance and has found applications in abrasives, paints and textile coatings. The inventors of the present disclosure have found that Nychem 1578x1 is readily incorporated into the waterborne ink compositions of the present disclosure and exhibits good water and abrasion resistance when used as an ink. Other suitable materials include those having high and medium acrylonitrile content such as Nychem® 1561X87; Nychem® 1561X98; Nychem® 1571X12; Nychem® 1571X8; Nychem® 1552; Nychem® 152X103; Nychem® 1562X117; Nychem® 1562X28; Nychem® 1570X79; Nychem® 1572; Nychem® 1572X32; Nychem® 1572X64; Nychem® XPE 140, as well as those with acrylonitrile-butadiene-styrene (ABS) content, such as Nychem® 1562X170; Nychem® 1570X75; Nychem® 1577; Nychem® 1578X1; and Nychem® XPE 130. Further, suitable specialty butadiene products include Nychem® 1561; Nychem® 1562; Nychem® 1562X160; Nychem® 1563; Nychem® 1581; Nychem® 1800X73; Nychem® 1871X3; Nychem® 2570X59; Nychem® 552; Nychem® N2000 and Nychem® N4000.

The polymer additive can be present in the ink composition in any suitable or desired amount. In embodiments, the polymer additive is present in an amount of from about 1 to about 35, or from about 10 to about 30, or from about 15 to about 25 percent by weight, based upon the total weight of the ink composition. In embodiments, the polymer additive is present in the ink composition in an amount of from about 1 percent by weight to about 10 percent by weight, based upon a total weight of the ink composition.

### WATER DISSIPATABLE SULFOPOLYESTER

In embodiments, the water dissipatable sulfonated polyesters of the present disclosure can be prepared from the polymerization reaction of at least one diacid monomer or at least one diester monomer, and at least one alkali sulfonated difunctional monomer. In embodiments, the sulfonated polyesters of the present disclosure can be prepared from the reaction of at least one diacid monomer or at least one diester monomer, at least one alkali sulfonated difunctional monomer, and at least one diol monomer. Water dissipatable sulfonated polyesters are capable of forming an aqueous dispersion having particles in the colloidal size range or smaller. One or more of heating, use of a surfactant or mixing may optionally be employed to form the dispersion. In an example, the dispersion is formed using mixing at room temperature (about 23 °C) in the presence of a surfactant, such as any of the surfactants disclosed herein.

The term "diacid" used herein, refers to compounds containing dicarboxylic acids or the compounds derived from the dicarboxylic acids (e.g., acid anhydrides or esters of the diacids). Examples of diacids include dicarboxylic acids of terephthalic acid, phthalic acid, isophthalic acid, fumaric acid, maleic acid, succinic acid, itaconic acid, succinic acid, succinic anhydride, dodecenylsuccinic acid, dodecenylsuccinic anhydride (DDSA), glutaric acid, glutaric anhydride, adipic acid, pimelic acid, suberic acid, azelic acid, dodecanediacid, dimethyl terephthalate, diethyl terephthalate, dimethylisophthalate, diethylisophthalate, dimethylphthalate, phthalic anhydride, diethylphthalate, dimethylsuccinate, dimethylfumarate, dimethylmaleate, dimethylglutarate, dimethyladipate, dimethyl dodecylsuccinate, and mixtures thereof. The term "diesters" used herein, refers to esters of the diacids used herein, where the alkyl groups of the diesters (the carbon group of the diol monomer) may contain from 2 to about 10 carbon atoms, which may be branched or unbranched.

The diacid or diester used in the preparation of the sulfonated polyester may be included in an amount of from about 40 to about 48 mole percent, from about 42 to about 47 mole percent, or from about 43 to about 45 mole percent. Unless otherwise stated, as used herein mole (or mol) percent refers to the percentage of moles of sulfonated monomer present in the final sulfonated polyester resin and can be calculated, for example, as (moles DMSIP (Dimethyl-5-Sulfoisophthalate Sodium Salt) charged/(total moles charged less excess moles glycol or other excess diols) X 100 percent).

Alkali sulfonated difunctional monomer examples, wherein the alkali is lithium, sodium, or potassium, and in particular embodiments wherein the alkali is sodium, include dimethyl-5-sulfo-isophthalate, dialkyl-5-sulfo-isophthalate-4-sulfo-1,8-naphthalic anhydride, 4-sulfo-phthalic acid, 4-sulfophenyl-3,5-dicarbomethoxybenzene, 6-sulfo-2-naphthyl-3,5-dicarbomethoxybenzene, sulfo-terephthalic acid, dimethyl-sulfo-terephthalate, dialkyl-sulfo-terephthalate, sulfo-ethanediol, 2-sulfo-propanediol, 2-sulfo-butanediol, 3-sulfo-pentanediol, 2-sulfo-hexanediol, 3-sulfo-2-methylpentanediol, N,N-bis(2-hydroxyethyl)-2-aminoethane sulfonate, 2-sulfo-3,3-dimethylpentanediol, sulfo-p-hydroxybenzoic acid, mixtures thereof, and the like. In embodiments, the alkali sulfonated difunctional monomer used in the preparation of the sulfonated polyester may be included in an amount of from about 3.0 to about 15 mole percent, from about 4 to about 10 mole percent, from about 5 to about 9 mole percent, or from about 6 to about 8 mole percent, or about 7.5 mole percent.

Previous experiments have been carried out in the prior art using sulfonated polyester with 3.5 wt% sulfonation. Beyond a certain concentration at this level of sulfonation, there is a solubility limit, and the particle domains are in the 100 nm regime, which may result in a reduced viscosity. In this disclosure, while lower sulfonation levels are possible, sulfopolyesters with a higher % sulfonation (such as 7.5% or greater) are contemplated to enable higher solids loading and smaller particle sizes, such as, for example, about 55 nm or less, such as about 50 nm to about 1 nm, as measured by Malvern Zetasizer (Dynamic Light Scattering (DLS)), which results in a more or less clear, homogenous solution as opposed to a typically colloidal mixture that may be produced at the lower sulfonation levels. This high solubility of the polymer results in an increased viscosity of the finished ink.

Examples of diols utilized in generating the sulfonated polyester include, but are not limited to, 1,2-propanediol, 1,3-propanediol, 1,2-butanediol, 1,3-butanediol, 1,4-butanediol, pentanediol, hexanediol, 2,2-dimethylpropanediol, 2,2,3-trimethylhexanediol, heptanediol, dodecanediol, bis(hyroxyethyl)-bisphenol A, bis(2-hydroxypropyl)-bisphenol A, 1,4-cyclohexanedimethanol, 1,3-cyclohexanedimethanol, xylenedimethanol, cyclohexanediol, diethylene glycol, bis(2-hydroxyethyl) oxide, dipropylene glycol, dibutylene, and mixtures thereof. The diol used in the preparation of the sulfonated polyester may be employed in an amount of from about 40 to about 48 mole percent, from about 42 to about 47 mole percent, or from about 43 to about 45 mole percent. In embodiments, an extra amount (or excess amount) of diol may be used to drive the reaction to completion, where the excess amount of diol is then distilled off or removed.

In embodiments, after polymerization, the resulting sulfonated polyesters may comprise an aryl unit, a sulfonated unit, and a aliphatic unit having the following formulae: 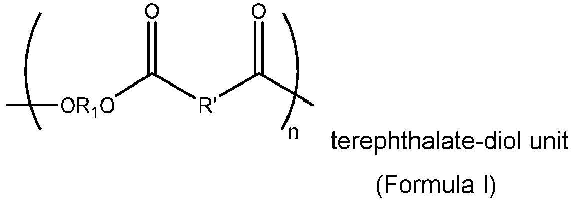 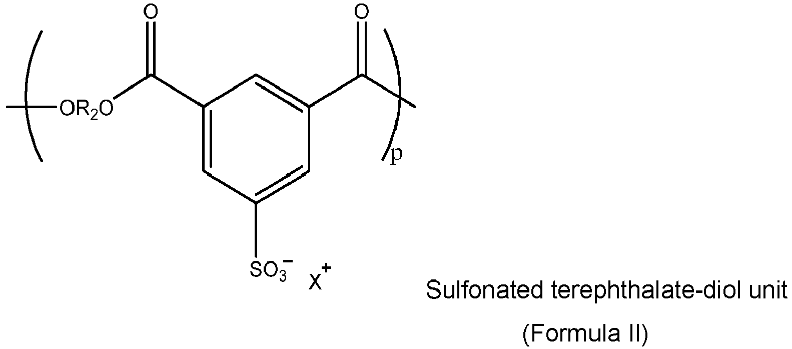 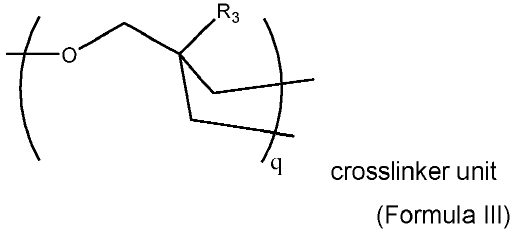 where each R₁ and each R₂ may be independently an alkylene of, for example, from 2 to about 25 carbon atoms such as ethylene, propylene, butylene, oxyalkylene diethyleneoxide, and the like; each R₃ may be independently an alkyl group of, for example, from 1 to 15 carbon atoms, branched or unbranched, such as, methyl, ethyl, propyl, isopropyl, butyl, and the like; each R' may be independently an arylene of, for example, from about 6 to about 36 carbon atoms, such as a benzylene, bisphenylene, bis(alkyloxy) bisphenolene, and the like; each X⁺ may be independently Na⁺, Li+, K+, and the like; and each n, each p and each q represent the number of randomly repeating segments, each of which may be independently from about 10 to about 100,000. In embodiments, n is from about 80 to about 95 mol percent, from about 84 to about 90 mol percent, or from about 86 to about 90 mol percent. In embodiments, p is from about 5 to about 15 mol percent, from about 6 to about 12 mol percent, or from about 7.5 to about 10 mol percent. In embodiments, q is from about 0.1 to about 4 mol percent, 0.1 to about 2.5 mol percent, from about 0.2 to about 1.5 mol percent. p represents the amount of sulfonation in the sulfonated polyester. q represents the amount of crosslinker in the sulfonated polyester. In an embodiment where the terephthalate diol unit, the sulphonated terephthalate diol unit and the crosslinker diol unit are the only polymer units, then n is 100 - (p + q). Other optional units may also be included, such as a branching agent unit as described below.

The sulfonated polyesters may include a random combination of at least one optionally repeating aryl unit, at least one optionally repeating sulfonated unit, at least one optionally repeating aliphatic unit.

In embodiments, the sulfonated polyesters may have the following general structure, or random copolymers thereof in which the n and p segments are separate: 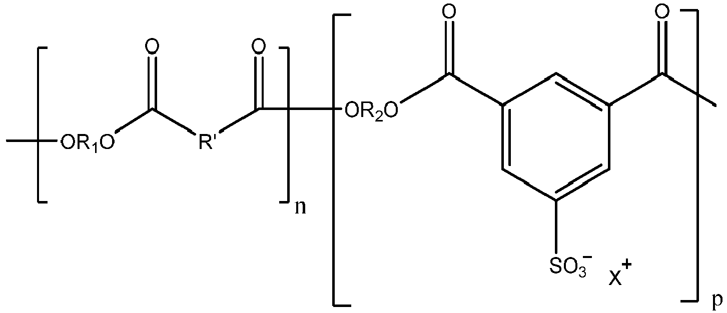 wherein R₁, R₂, R', X, n and p are the same as defined herein above for Formulae I, II and III.

In embodiments, the sulfonated polyester may have the following general structure: 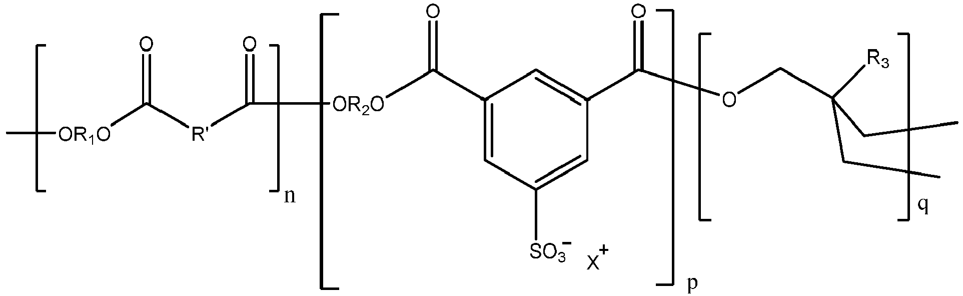 wherein R₁, R₂, R₃, R', X, n, p, and q are the same as defined herein above for Formulae I, II and III.

Examples of the sulfonated polyesters further include those disclosed in U.S. Patent No. 7,312,011 which is incorporated herein by reference in its entirety.

In embodiments, the sulfonated polyesters are amorphous. In embodiments, the amorphous sulfonated polyesters can be an acid or a salt of a random sulfonated polyester of poly(1,2-propylene-5-sulfoisophthalate), poly(neopentylene-5-sulfoisophthalate), poly(diethylene-5-sulfoisophthalate), copoly(1,2-propylene-5-sulfoisophthalate)-copoly-(1,2-propylene-terephthalate phthalate), copoly(1,2-propylene-diethylene-5-sulfoisophthalate)-copoly-(1,2-propylene-diethylene-terephthalate phthalate), copoly(ethylene-neopentylene-5-sulfoisophthalate)-copoly-(ethylene-neopentylene-terephthalate-phthalate), copoly(propoxylated bisphenol A)-copoly-(propoxylated bisphenol A-5-sulfoisophthalate), copoly(ethylene-terephthalate)-copoly-(ethylene-5-sulfo-isophthalate), copoly(propylene-terephthalate)-copoly-(propylene-5-sulfo-isophthalate), copoly(diethylene-terephthalate)-copoly-(diethylene-5-sulfo-isophthalate), copoly(propylene-diethylene-terephthalate)-copoly-(propylene-diethylene-5-sulfoisophthalate), copoly(propylene-butylene-terephthalate)-copoly(propylene-butylene-5-sulfo-isophthalate), copoly(propoxylated bisphenol-A-fumarate)-copoly(propoxylated bisphenol A-5-sulfo-isophthalate), copoly(ethoxylated bisphenol-A-fumarate)-copoly(ethoxylated bisphenol-A-5-sulfo-isophthalate), copoly(ethoxylated bisphenol-A-maleate)-copoly(ethoxylated bisphenol-A-5-sulfoisophthalate), copoly(propylene-diethylene terephthalate)-copoly(propylene-5-sulfoisophthalate), copoly(neopentyl-terephthalate)-copoly-(neopentyl-5-sulfoisophthalate), and the like, as well as mixtures thereof.

The salts of the random amorphous sulfonated polyesters of the present embodiments may include salts of alkali metals, such as sodium, lithium, and potassium; salts of alkaline earth metals, such as beryllium, magnesium, calcium, and barium; metal salts of transition metals, such as vanadium, iron, cobalt, copper; metal salts, such as aluminum salts, and the like, as well as mixtures thereof.

In embodiments, the sulfonated polyester matrix is a branched polymer. In embodiments, the sulfonated polyester matrix is a linear polymer. The selection of branched or linear polymer may depend on, inter alia, the downstream application of the composite product. Linear polymers can be used to create strands of fibers or form a strong mesh-like structure. Branched polymers may be useful to confer thermoplastic properties on the resultant composite material.

The linear sulfonated polyester are generally prepared by the polycondensation of an organic diol and a diacid or diester, at least one of which is sulfonated or a sulfonated difunctional monomer being included in the reaction, and a polycondensation catalyst. For the branched sulfonated polyester, the same materials may be used, with the further inclusion of a branching agent such as a multivalent polyacid or polyol. Branching agents for use in forming the branched sulfonated polyester include, for example, a multivalent polyacid such as 1,2,4-benzenetricarboxylic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid, 1,3-dicarboxyl-2-methyl-2-methylene-carboxylpropane, tetra(methylene-carboxyl)methane, and 1,2,7,8-octanetetracarboxylic acid, acid anhydrides thereof, and lower alkyl esters thereof, 1 to about 6 carbon atoms; a multivalent polyol such as sorbitol, 1,2,3,6-hexanetetrol, 1,4-sorbitane, pentaerythritol, dipentaerythritol, tripentaerythritol, sucrose, 1,2,4-butanetriol, 1,2,5-pentatriol, glycerol, 2-methylpropanetriol, 2-methyl-1,2,4-butanetriol, trimethylolethane, trimethylolpropane, 1,3,5-trihydroxymethylbenzene, mixtures thereof, and the like. The branching agent amount selected is, for example, from about 0.1 to about 5 mole percent of the sulfonated polyester.

The polycondensation may be carried out under acidic conditions. The polycondensation may be carried out in the presence of a catalyst. In embodiments, the catalyst employed in the polyesterification reaction is tin-based. Such catalysts may be based on tin (II) or tin (IV) oxidation states. In embodiments, the tin-based catalyst are mono-, di-, or tetraalkyl tin-based. Examples of tin-based catalyst include tetraalkyl titanates, dialkyltin oxide such as dibutyltin oxide, tetraalkyltin such as dibutyltin dilaurate, dialkyltin oxide hydroxide such as butyltin oxide hydroxide, aluminum alkoxides, alkyl zinc, dialkyl zinc, zinc oxide, stannous oxide, or mixtures thereof. In embodiments, monoalkyl tin compounds may further comprise oxide and/or hydroxide groups attached to the tin atom. In embodiments, the tin-based catalyst comprises a mixture of monobutyltin oxide, monobutyltin hydroxide oxide, and butyl stannoic acid, commercially available as FASCAT® 4100. Other tin-based catalysts employed in transesterification chemistry are well-known in the art and can be used as well to prepare the sulfonated polyesters herein. The amount of catalysts used herein may be from about 0.01 mole percent to about 5 mole percent based on the starting amount of diacid or diester used to generate the sulfonated polyesters.

The sulfonated polyesters suitable for use in the present disclosure may have a glass transition (Tg) temperature of from about 45° C to about 95° C, or from about 52° C to about 70° C, as measured by a Differential Scanning Calorimeter. The sulfonated polyesters may have a number average molecular weight of from about 2,000 g per mole to about 150,000 g per mole, from about 3,000 g per mole to about 50,000 g per mole, or from about 6,000 g per mole to about 15,000 g per mole, as measured by Gel Permeation Chromatography. The sulfonated polyesters may have a weight average molecular weight of from about 3,000 g per mole to about 300,000 g per mole, from about 8,000 g per mole to about 90,000 g per mole, or from about 10,000 g per mole to about 60,000 g per mole, as measured by the Gel Permeation Chromatograph. The sulfonated polyesters may have a polydispersity of from about 1.6 to about 100, from about 2.0 to about 50, or from about 5.0 to about 30, as calculated by the ratio of the weight average to number average molecular weight.

In embodiments, the sulfonated polyester has a particle size in a range of, for example, from about 1 nanometer (nm) to about 55 nm, from about 5 to about 45 nm, or from about 5 to about 30 nm. A particle size of less than 5 nm may be useful for reinforcement of polymer matrices without disturbing transparency and other properties of coatings. Particle sizes can be determined using a Malvern Zetasizer (Dynamic Light Scattering (DLS)).

In embodiments, the sulfonated polyester has a particle size of from about 5 nanometers to about 55 nanometers. In further embodiments, the polyester has a particle size of from about 10 nanometers to about 15 nanometers. As used herein, references to "particle size" will generally refer to Dso mass-median-diameter (MMD) or the log-normal distribution mass median diameter. The MMD is considered to be the average particle diameter by mass.

In embodiments, there are provided methods comprising heating a sulfonated polyester resin in water, thereby forming an emulsion of composite particles comprising a sulfonated polyester. In embodiments, heating is conducted at a temperature of from about 65 °C to about 95 °C.

In certain embodiments, a method herein comprises heating a sulfonated polyester resin in water, wherein the sodium sulfonated polyester has a degree of sulfonation of from about 3.0 mol percent to about 15 mol percent, from about 6 to about 12 mol percent, or from about 7.5 to about 10 mol percent; and forming an emulsion of particles comprising the sulfonated polyester. In embodiments, the method further comprises combining the polyester particles with water, an optional co-solvent, and a polyurethane dispersion to form an aqueous ink composition.

The ink of the present disclosure may contain from about 10 to about 60 weight percent, from about 15 to about 50 weight percent, or from about 20 to about 40 weight percent, or from about 25 to about 35 weight percent, of the sulfonated polyester based on the total weight of the ink.

### HUMECTANT

The ink compositions herein can comprise a mixture of water and a water soluble or water miscible component, where the water soluble or water miscible component is referred to as a co-solvent, humectant, or the like. Examples of humectants include alcohols and alcohol derivatives, including aliphatic alcohols, aromatic alcohols, diols, glycol ethers, polyglycol ethers, long chain alcohols, primary aliphatic alcohols, secondary aliphatic alcohols, 1,2-alcohols, 1,3-alcohols, 1,5-alcohols, ethylene glycol alkyl ethers, propylene glycol alkyl ethers, methoxylated glycerol, ethoxylated glycerol, higher homologues of polyethylene glycol alkyl ethers, and the like, with specific examples including ethylene glycol, propylene glycols, diethylene glycols, glycerine, dipropylene glycols, polyethylene glycols, polypropylene glycols, trimethylolpropane, 1,5-pentanediol, 2-methyl-1,3,-propanediol, 2-ethyl-2-hydroxymethyl-1,3-propanediol, 3-methoxybutanol, 3-methyl-1,5-pentanediol, 1,3-propanediol, 1,4-butanediol, 2,4-heptanediol, and the like; also suitable are amides, ethers, urea, substituted ureas such as thiourea, ethylene urea, alkylurea, alkylthiourea, dialkylurea, and dialkylthiourea, carboxylic acids and their salts, such as 2-methylpentanoic acid, 2-ethyl-3- propylacrylic acid, 2- ethyl-hexanoic acid, 3-ethoxyproponic acid, and the like, esters, organosulfides, organosulfoxides, sulfones (such as sulfolane), carbitol, butyl carbitol, cellusolve, ethers, tripropylene glycol monomethyl ether, ether derivatives, hydroxyethers, amino alcohols, ketones, N-methylpyrrolidone, 2-pyrrolidinone, cyclohexylpyrrolidone, amides, sulfoxides, lactones, polyelectrolytes, methyl sulfonylethanol, imidazole, 1,3-dimethyl-2- imidazolidinone, betaine, sugars, such as 1-deoxy-D-galactitol, mannitol, inositol, and the like, substituted and unsubstituted formamides, substituted and unsubstituted acetamides, and other water soluble or water miscible materials, as well as mixtures thereof. In embodiments, the co-solvent comprises a compound selected from the group consisting of ethylene glycol, N-methylpyrrolidone, methoxylated glycerol, ethoxylated glycerol, and mixtures thereof.

When mixtures of water and water soluble or miscible organic solvent liquids are selected as the liquid vehicle, the water to organic co-solvent ratio ranges can be any suitable or desired ratio, in embodiments from about 100:0 to about 30:70, or from about 97:3 to about 40:60, or from about 95:5 to about 60:40. The non-water component of the liquid vehicle generally serves as a humectant or co-solvent which has a boiling point higher than that of water (100 °C). The humectant selected is one that will mix with water without phase separation; thus, a humectant having a polarity that is compatible with water is selected. The organic component of the ink vehicle can also serve to modify ink surface tension, modify ink viscosity, dissolve or disperse the colorant, and/or affect the drying characteristics of the ink. In embodiments, the ink is more attracted to paper substrates than plastic media.

The humectants which are used in the ink formulation can help with surface tension, drying, leveling, etc. In embodiments, water makes up over 20% by weight of the formulation based on the total weight of the ink composition. In embodiments water comprises from about 25% to about 70% by weight, such as about 25% to about 50% by weight, or about 30% to about 40% by weight of the ink composition. Thus, the ink compositions herein are mainly aqueous.

In certain embodiments, the humectant comprises a compound selected from the group consisting of sulfolane, methyl ethyl ketone, isopropanol, 2-pyrrolidinone, polyethylene glycol, and mixtures thereof.

The total amount of liquid vehicle can be provided in any suitable or desired amount. In embodiments, the liquid vehicle is present in the ink composition in an amount of from about 75 to about 97 percent, or from about 80 to about 95 percent, or from about 85 to about 95 percent, by weight, based on the total weight of the ink composition.

### COLORANTS

The compositions of the present disclosure comprise at least one colorant chosen from a photochromic colorant and a fluorescent colorant.

Photochromism is the reversible color transformation of a material due to the absorption of electromagnetic radiation. Photochromic materials and inks are well known in the industry. Various photochromic materials are suitable for the compositions of the present disclosure. Examples include: spiropyrans, spiroxazines, stilbenes, aromatic azobenzenes, chromenes (e.g., benzopyran and derivatives thereof), naphthopyrans, bisimidazoles, spirodihydroindolizines, quinines, perimidinespirocyclohexadienones, viologens, fulgides, diarylethenes, triarylmethanes, anils and other photochromic materials, many of which are commercially available

Fluorescence is a form of luminescence, in which a material irradiated with light, emits a wavelength of lesser energy. The incident radiation used to irradiate the material is most commonly in the UV spectrum, whereas the emission is commonly in the visible, although both the incident and emission radiation can be any desired wavelength that results in fluoresence. After the removal of the incident (e.g., UV) light, the material immediately returns to its original state. Even if the ink is visible, it will not respond to irradiation if simply photocopied by any means. Fluorescent inks can be formulated with varying image lifetimes after exposure to UV radiation, based on the UV active materials being used. These lifetimes can range from <1s to weeks with some diarylethene compounds. Fluorescent inks can be used to increase the value of applications such as signage, safety and security/anti-counterfeit, as well as novelty items such as T-shirts.

There are many commercially available fluorescent pigments and dyes available. These include organic or inorganic materials that come in fluorescent colours, as well as clear pigments that fluoresce when irradiated with UV or other light. Risk Reactor Inc. offers a variety of visible, as well as clear, UV fluorescent pigments in addition to UV tracer dyes. For example, materials such as the Risk Reactor Clear PFLO series pigments are highly miscible in the waterborne DALI ink formulations and exhibit fluorescent properties. The inks are clear to yellowish and fluoresce strongly when exposed to UV radiation. LCR Hallcrest also offers a variety of pigments and dyes that change from clear to colour upon exposure to the sun or another UV source. They also supply irreversible materials that will stay coloured after exposure to a UV source, which could be useful in security or safety applications. Other suppliers that offer similar materials are QCR Solutions and Briscent LTD, in addition to common vendors such as Amazon and Walmart. In addition, many compounds already listed are fluorescent and can be purchased in their pure form from chemical suppliers. In practice, any fluorescent pigment or dye that is miscible with the waterborne DALI system should be compatible in the ink.

The fluorescent or chromatic colorants can be present in the ink composition in any desired or effective amount. In embodiments, the fluorescent or chromatic colorants can be present in an amount of from about 0.05 to about 17.5 weight percent, or from about 0.1 to about 10 weight percent, or from about 1 to about 5 weight percent, based on the total weight of the ink composition.

In addition to the colorants that are fluorescent or chromatic, the ink composition herein may also contain optional colorants that are not fluorescent or chromatic. Any suitable or desired colorant can be used in embodiments herein, including pigments, dyes, dye dispersions, pigments dispersions, and mixtures and combinations thereof.

The optional colorant may be provided in the form of a colorant dispersion. In embodiments, the colorant dispersion has an average particle size of from about 20 to about 500 nanometers (nm), or from about 20 to about 400 nm, or from about 30 to about 300 nm. In embodiments, the colorant is selected from the group consisting of dyes, pigments, and combinations thereof, and optionally, the colorant is a dispersion comprising a colorant, an optional surfactant, and an optional dispersant. In embodiments, the colorant is present and comprises a pigment, a pigment dispersion, or a combination thereof.

Examples of suitable colorants that are neither fluorescent nor chromatic include dyes such as anionic dyes, cationic dyes, nonionic dyes, zwitterionic dyes, and the like. Specific examples of suitable dyes include Food dyes such as Food Black No. 1, Food Black No. 2, Food Red No. 40, Food Blue No.1, Food Yellow No.7, and the like, FD & C dyes, Acid Black dyes (No.1, 7, 9, 24, 26, 48, 52, 58, 60, 61, 63, 92, 107, 109, 118, 119, 131, 140, 155, 156, 172, 194, and the like), Acid Red dyes (No. 1, 8, 32, 35, 37, 52, 57, 92, 115, 119, 154, 249, 254, 256, and the like), Acid Blue dyes (No. 1, 7, 9, 25, 40, 45, 62, 78, 80, 92, 102, 104, 113, 117, 127, 158, 175, 183, 193,209, and the like), Acid Yellow dyes (No.3, 7, 17, 19, 23, 25, 29, 38, 42, 49, 59, 61, 72, 73, 114, 128, 151, and the like), Direct Black dyes (No.4, 14, 17, 22, 27, 38, 51,112,117,154,168, and the like), Direct Blue dyes (No. 1, 6,8, 14, 15,25, 71, 76, 78, 80,86,90, 106,108,123,163,165, 199,226,and the like), Direct Red dyes (No. 1, 2, 16, 23, 24, 28, 39, 62, 72, 236, and the like), Direct Yellow dyes (No.4, 11, 12, 27, 28, 33, 34, 39, 50, 58, 86, 100, 106, 107, 118, 127, 132, 142, 157, and the like), Reactive Dyes, such as Reactive Red Dyes (No.4, 31, 56, 180, and the like), Reactive Black dyes (No. 31 and the like), Reactive Yellow dyes (No. 37 and the like); anthraquinone dyes, monoazo dyes, disazo dyes, phthalocyanine derivatives, including various phthalocyanine sulfonate salts, aza(18)annulenes, formazan copper complexes, triphenodioxazines, and the like; as well as mixtures thereof.

Pigments that are neither fluorescent nor chromatic can include, for example, black pigments, white pigments, cyan pigments, magenta pigments, yellow pigments, and the like. Further, pigments can be organic or inorganic particles. Suitable inorganic pigments include carbon black. However, other inorganic pigments may be suitable such as titanium oxide, cobalt blue (CoO-Al₂0₃), chrome yellow (PbCr0₄), and iron oxide. Suitable organic pigments include, for example, azo pigments including diazo pigments and monoazo pigments, polycyclic pigments (e.g., phthalocyanine pigments such as phthalocyanine blues and phthalocyanine greens), perylene pigments, perinone pigments, anthraquinone pigments, quinacridone pigments, dioxazine pigments, thioindigo pigments, isoindolinone pigments, pyranthrone pigments, and quinophthalone pigments), insoluble dye chelates (e.g., basic dye type chelates and acidic dye type chelate), nitro pigments, nitroso pigments, anthanthrone pigments such as PR168, and the like. Representative examples of phthalocyanine blues and greens include copper phthalocyanine blue, copper phthalocyanine green, and derivatives thereof (Pigment Blue 15, Pigment Green 7, and Pigment Green 36). Representative examples of quinacridones include Pigment Orange 48, Pigment Orange 49, Pigment Red 122, Pigment Red 192, Pigment Red 202, Pigment Red 206, Pigment Red 207, Pigment Red 209, Pigment Violet 19, and Pigment Violet 42. Representative examples of anthraquinones include Pigment Red 43, Pigment Red 194, Pigment Red 177, Pigment Red 216 and Pigment Red 226. Representative examples of perylenes include Pigment Red 123, Pigment Red 149, Pigment Red 179, Pigment Red 190, Pigment Red 189 and Pigment Red 224. Representative examples of thioindigoids include Pigment Red 86, Pigment Red 87, Pigment Red 88, Pigment Red 181, Pigment Red 198, Pigment Violet 36, and Pigment Violet 38. Representative examples of heterocyclic yellows include Pigment Yellow 1, Pigment Yellow 3, Pigment Yellow 12, Pigment Yellow 13, Pigment Yellow 14, Pigment Yellow 17, Pigment Yellow 65, Pigment Yellow 73, Pigment Yellow 74, Pigment Yellow 90, Pigment Yellow 110, Pigment Yellow 117, Pigment Yellow 120, Pigment Yellow 128, Pigment Yellow 138, Pigment Yellow 150, Pigment Yellow 151, Pigment Yellow 155, and Pigment Yellow 213. Such pigments are commercially available in either powder or press cake form from a number of sources including, BASF Corporation, Engelhard Corporation, and Sun Chemical Corporation. Examples of black pigments that may be used include carbon pigments. The carbon pigment can be almost any commercially available carbon pigment that provides acceptable optical density and print characteristics. Carbon pigments suitable for use in the present system and method include, without limitation, carbon black, graphite, vitreous carbon, charcoal, and combinations thereof. Such carbon pigments can be manufactured by a variety of known methods, such as a channel method, a contact method, a furnace method, an acetylene method, or a thermal method, and are commercially available from such vendors as Cabot Corporation, Columbian Chemicals Company, Evonik, and E.I. DuPont de Nemours and Company. Suitable carbon black pigments include, without limitation, Cabot pigments such as MONARCH®® 1400, MONARCH® 1300, MONARCH® 1100, MONARCH® 1000, MONARCH® 900, MONARCH® 880, MONARCH® 800, MONARCH® 700, CAB-O-JET® 200, CAB-O-JET 300, REGAL, BLACK PEARLS®, ELFTEX®, MOGUL®, and VULCAN® pigments; Columbian pigments such as RAVEN® 5000, and RAVEN® 3500; Evonik pigments such as Color Black FW 200, FW 2, FW 2V, FW 1, FW18, FW S160, FW S170, Special Black 6, Special Black 5, Special Black 4A, Special Black 4, PRINTEX® U, PRINTEX® 140U, PRINTEX® V, and PRINTEX® 140V. The above list of pigments includes unmodified pigment particulates, small molecule attached pigment particulates, and polymer-dispersed pigment particulates. Other pigments can also be selected, as well as mixtures thereof. The pigment particle size is desired to be as small as possible to enable a stable colloidal suspension of the particles in the liquid vehicle and to prevent clogging of the ink channels when the ink is used in a thermal ink jet printer or a piezoelectric ink jet printer.

The optional colorants can be present in the ink composition in any desired or effective amount, in embodiments, the colorant can be present in an amount of from about 0.05 to about 50 percent, or from about 0.1 to about 10 percent, or from about 1 to about 5 percent by weight, based on the total weight of the ink composition.

In embodiments, the ink composition herein further enables use of a high colorant concentration. In embodiments the colorant (e.g., pigment) concentration is greater than 50 percent, in embodiments, greater than 60 percent, by weight based on the total weight of the ink composition, while maintaining desired characteristics of desired viscosity at room temperature and desired viscosity at heated temperature for ink transfer.

The ink compositions of the present disclosure can employ one or more of the colorants described herein to achieve desired ink properties. As an example, the colorants can be chosen to address a differential gloss problem discovered by the inventors where the inks may cause a noticeable difference in gloss between the fluorescent ink and the ink that it is being laid on top of, in the case of previously inked substrates, or between the fluorescent ink and the printable subtrate (e.g., paper) if no ink has yet been applied, so that the fluorescent ink is not actually invisible. Hiding the fluorescent materials within the standard pigment would solve this problem. In an embodiment, a fluorescent dye is mixed with a colorant of, for example, one of the fundamental colors (CMYK). In this case, text can be visible such as with normal print, but the color which was mixed with fluorescent dye will also show fluorescence (color change) when exposed to UV light for purposes of authentication. For example, if fluorescent dye is mixed with a non-fluorescent yellow colorant, then any parts of the document containing yellow will have the capability to change color from yellow (under normal light) to the emitting color of the fluorescent dye, for example, red, blue or another color. This has the advantage of removing the differential gloss problem which appears when the colorless ink base is used.

In another embodiment, colorants that are colorless under standard room lighting can be used to formulate colourless fluorescent security inks that have the ability to fluoresce when irradiated with a certain wavelength range of light (e.g. UV). The colourless security inks can be overprinted as additional information for authentication purposes, on a previously permanently printed document by any technique. This also diminishes the differential gloss problem. This approach has the advantage that the fluorescent ink will fluoresce and the color of the previous print (including black or white or any color) is inconsequential as long as the fluorescent ink is placed on top.

### SURFACTANT

The inks disclosed may also contain a surfactant. Examples of suitable surfactants include ionic surfactants, anionic surfactants, cationic surfactants, nonionic surfactants, zwitterionic surfactants, and the like, as well as mixtures thereof. Examples of suitable surfactants include alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, and the like, with specific examples including primary, secondary, and tertiary amine salt compounds such as hydrochloric acid salts, acetic acid salts of laurylamine, coconut amine, stearylamine, rosin amine; quaternary ammonium salt type compounds such as lauryltrimethylammonium chloride, cetyltrimethylammonium chloride, benzyltributylammonium chloride, benzalkonium chloride, etc.; pyridinium salty type compounds such as cetylpyridinium chloride, cetylpyridinium bromide, etc.; nonionic surfactants such as polyoxyethylene alkyl ethers, polyoxyethylene alkyl esters, acetylene alcohols, acetylene glycols; and other surfactants such as 2- heptadecenyl-hydroxyethylimidazoline, dihydroxyethylstearylamine, stearyldimethylbetaine, and lauryldihydroxyethylbetaine; fluorosurfactants; and the like, as well as mixtures thereof. Additional examples of nonionic surfactants include polyacrylic acid, methalose, methyl cellulose, ethyl cellulose, propyl cellulose, hydroxy ethyl cellulose, carboxy methyl cellulose, polyoxyethylene cetyl ether, polyoxyethylene lauryl ether, polyoxyethylene octyl ether, polyoxyethylene octylphenyl ether, polyoxyethylene oleyl ether, polyoxyethylene sorbitan monolaurate, polyoxyethylene stearyl ether, polyoxyethylene nonylphenyl ether, dialkylphenoxy poly(ethyleneoxy) ethanol, available from Rhone-Poulenc as IGEPAL CA-210™ IGEPAL CA-520™, IGEPAL CA-720™, IGEPAL CO-890™, IGEPAL C0-720™, IGEPAL C0-290™, IGEPAL CA-21O™, ANTAROX 890™, and ANTAROX 897™. Other examples of suitable nonionic surfactants include a block copolymer of polyethylene oxide and polypropylene oxide, including those commercially available as SYNPERONIC™ PE/F, such as SYNPERONIC™ PE/F 108. Another commercial example of a surfactant is BYK®-DYNWET 800, which is an alcohol alkoxylate that is a silicone-free surface additive for aqueous systems. Other examples include di-alkyl sulfosuccinates, alkyl sulfates, alky ether sulfates, Sulfo-carboxylic compounds and ethoxylated alkyl phenols. Combinations of any of the surfactants listed herein can be used.

Other examples of suitable anionic surfactants include sulfates and sulfonates, sodium dodecylsulfate (SDS), sodium dodecylbenzene sulfonate, sodium dodecylnaphthalene sulfate, dialkyl benzenealkyl sulfates and sulfonates, acids such as abitic acid available from Sigma-Aldrich, NEOGEN R™, NEOGEN SC™ available from Daiichi Kogyo Seiyaku, combinations thereof, and the like. Other examples of suitable anionic surfactants include DOWFAX™ 2A1, an alkyldiphenyloxide disulfonate from Dow Chemical Company, and/or TAYCA POWER BN2060 from Tayca Corporation (Japan), which are branched sodium dodecyl benzene sulfonates. Other examples of suitable cationic surfactants, which are usually positively charged, include alkylbenzyl dimethyl ammonium chloride, dialkyl benzenealkyl ammonium chloride, lauryl trimethyl ammonium chloride, alkylbenzyl methyl ammonium chloride, alkyl benzyl dimethyl ammonium bromide, benzalkonium chloride, cetyl pyridinium bromide, C 12, C15, C17 trimethyl ammonium bromides, halide salts of quaternized polyoxyethylalkylamines, dodecylbenzyl triethyl ammonium chloride, MIRAPOL™ and ALKAQUAT™, available from Alkaril Chemical Company, SANIZOL™ (benzalkonium chloride), available from Kao Chemicals, and the like, as well as mixtures thereof. Mixtures of any two or more surfactants can be used.

The optional surfactant can be present in any desired or effective amount, in embodiments, the surfactant is present in an amount of from about 0.01 to about 5 percent by weight, based on the total weight of the ink composition. It should be noted that the surfactants are named as dispersants in some cases.

The ink composition can further comprise additives. Optional additives that can be included in the ink compositions include biocides, fungicides, pH controlling agents such as acids or bases, phosphate salts, carboxylates salts, sulfite salts, amine salts, buffer solutions, and the like, sequestering agents such as EDTA (ethylenediamine tetra acetic acid), viscosity modifiers, leveling agents, and the like, as well as mixtures thereof.

### METHOD OF MAKING THE INK COMPOSITIONS

The ink compositions herein can be prepared by any suitable or desired process, such as by simple mixing of the ingredients. One process entails mixing all of the ink ingredients together and optionally filtering the mixture to obtain an ink. Inks can be prepared by mixing the ingredients, heating if desired, and optionally filtering, followed by adding any desired additional additives to the mixture and mixing at room temperature with moderate shaking until a homogeneous mixture is obtained, in embodiments from about 5 to about 10 minutes. Alternatively, the optional ink additives can be mixed with the other ink ingredients during the ink preparation process, which takes place according to any desired procedure, such as by mixing all the ingredients, heating if desired, and optionally filtering.

In embodiments, a process herein comprises combining at least one water dissipatible sulfonated polyester; at least one polymer additive; at least one colorant chosen from a photochromic colorant and a fluorescent colorant; at least one surfactant; at least one humectant; and water.

In embodiments, a process herein comprises combining the sulfonated polyester, water, the surfactant, at least one colorant chosen from a photochromic colorant and a fluorescent colorant, and a polymer additive as described herein to form an aqueous ink composition. In a specific embodiment, the inks are prepared as follows: 1) preparation of a sulfonated polyester; 2) preparation of a dispersion of a colorant optionally stabilized with a surfactant; 3) mixing of the sulfonated polyester with the colorant dispersion and polymer additive dispersion; and 4) addition of other components such as water, humectants, and optional additives.

### PRINTING PROCESS

In embodiments, a method of digital offset printing herein includes applying the ink composition of the present disclosure onto a re-imageable imaging member surface, the re-imageable imaging member having dampening fluid disposed thereon to form an ink image; and transferring the ink image from the re-imageable surface of the imaging member to a printable substrate.

The ink composition in accordance with the present disclosure is not limited to use in digital offset printing. The ink composition disclosed herein may also be useful in other offset printing processes, such as conventional offset printing and processes that employ hybrid conventional offset and digital offset printing systems. Nonetheless, the ink compositions of the present disclosure meet systems requirements that are unique to digital offset printing systems.

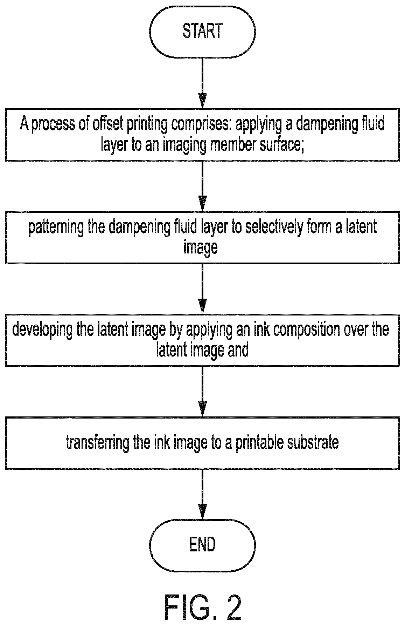

In embodiments, a process of offset printing, such as digital offset printing, comprises: applying a dampening fluid layer to an imaging member surface; patterning the dampening fluid layer to selectively form a latent image; developing the latent image by applying an ink composition over the latent image; and transferring the ink image to a printable substrate, as shown in FIG. 2. The ink composition comprises: at least one water dissipatible sulfonated polyester; at least one polymer additive; at least one colorant chosen from a photochromic colorant and a fluorescent colorant; at least one surfactant; at least one humectant; and water. In embodiments, applying the ink composition comprises applying the ink composition using an anilox delivery system.

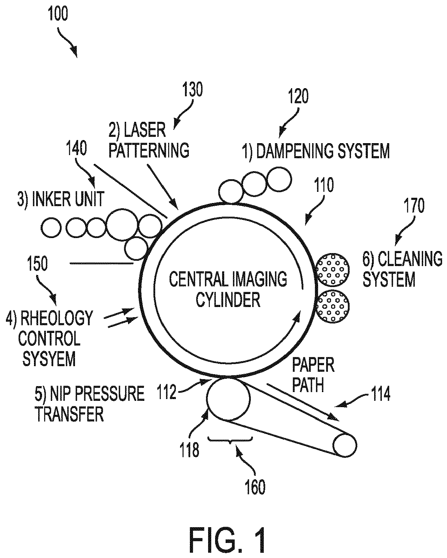

For example, referring to FIG. 1, an imaging member 110 is used to apply the ink compositions of the present disclosure in the form of an ink image to an image receiving media substrate 114 at a transfer nip 112. The transfer nip 112 is formed by an impression roller 118, as part of an image transfer mechanism 160, exerting pressure in the direction of the imaging member 110.

The exemplary system 100 includes a dampening fluid system 120 generally comprising a series of rollers, which may be considered as dampening rollers or a dampening unit, for uniformly wetting the re-imageable surface of the imaging member 110 with dampening fluid. After dampening fluid is provided by the dampening fluid system 120 on the re-imageable surface of the imaging member 110, an optical patterning subsystem 130 may be used to selectively form a latent image in the uniform dampening fluid layer by image-wise patterning the dampening fluid layer.

Following patterning of the dampening fluid layer by the optical patterning subsystem 130, the patterned dampening fluid layer over the re-imageable surface of the imaging member 110 is presented to an inker subsystem 140. The inker subsystem 140 is used to apply a uniform layer of ink over the latent image formed by the patterned layer of dampening fluid and the re-imageable surface layer of the imaging member 110. The inker subsystem 140 may use an anilox roller to meter an offset lithographic ink, such as the ink compositions of the present disclosure, onto one or more ink forming rollers that are in contact with the re-imageable surface layer of the imaging member 110.

The cohesiveness and viscosity of the ink residing in the re-imageable layer of the imaging member 110 may be modified by, for example, a rheology (complex viscoelastic modulus) control subsystem 150. The rheology control system 150 may form a partial crosslinking layer of the ink on the re-imageable surface to, for example, increase ink cohesive strength relative to the re-imageable surface layer. Curing mechanisms may include heat curing, drying (e.g., air drying), or various forms of chemical curing. Cooling may be used to modify rheology as well via multiple physical cooling mechanisms, as well as via chemical cooling.

The inks of the present disclosure are not UV curable. Therefore, the method can further comprise modifying the rheology of the ink image on the imaging member surface without the use of a UV lamp (e.g., without UV emitted from LED). For example, the rheology of the ink can be modified by air drying, thermal curing, such as by using radiative energy (e.g., IR lamp or full spectrum mercury lamp) or any other thermal heat source, or using combinations of such techniques, thereby partially or completely drying the ink image prior to transferring the ink image to a printable substrate.

The ink is then transferred from the re-imageable surface of the imaging member 110 to a substrate of image receiving medium 114 using a transfer subsystem 160. The transfer occurs as the substrate 114 is passed through a nip 112 between the imaging member 110 and an impression roller 118 such that the ink within the voids of the re-imageable surface of the imaging member 110 is brought into physical contact with the substrate 114. With the adhesion of the ink, such as the ink of the present disclosure, having been modified by the rheology control system 150, modified adhesion of the ink causes the ink to adhere to the substrate 114 and to separate from the re-imageable surface of the imaging member 110. In certain offset lithographic systems, it should be recognized that an offset roller, not shown in FIG.1, may first receive the ink image pattern and then transfer the ink image pattern to a substrate according to a known indirect transfer method.

Following the transfer of the majority of the ink to the substrate 114, any residual ink and/or residual dampening fluid may be removed from the re-imageable surface of the imaging member 110, typically without scraping or wearing that surface, thereby cleaning the re-imageable surface. Once cleaned, the re-imageable surface of the imaging member 110 is again presented to the dampening fluid system 120 by which a fresh layer of dampening fluid is supplied to the re-imageable surface of the imaging member 110, and the process is repeated.

Any suitable substrate, recording sheet, or removable support, stage, platform, and the like, can be employed for depositing the ink compositions herein using the offset printing methods described herein. Example substrates include plain papers such as XEROX® 4024 papers, XEROX® Image Series papers, Courtland 4024 DP paper, ruled notebook paper, bond paper, silica coated papers such as Sharp Company silica coated paper, JuJo paper, HAMMERMILL LASERPRINT® paper, and the like, glossy coated papers such as XEROX® Digital Color Gloss, Sappi Warren Papers LUSTROGLOSS®, and the like, transparency materials, fabrics, textile products, plastics, polymeric films, glass, glass plate, inorganic substrates such as metals (e.g., foils or other metal layers) and wood, as well as meltable or dissolvable substrates, such as waxes or salts, in the case of removable supports for free standing objects, and the like. In certain embodiments, the substrate comprises materials selected from the group consisting of paper, plastic, polymeric film, cardboard, paperboard, folded paperboard, Kraft paper, glass, glass plate, wood, metal, and combinations thereof. In a specific embodiments, the substrate is a label. The label can be selected from any of the aforementioned types of substrate. In embodiments, the substrate comprises food packaging, medicinal packaging, and the like. In certain embodiments, the ink compositions herein form an undercoat. In embodiment, the substrate comprises a member of the group consisting of food packaging, medicinal packaging, medical devices, cosmetic packaging, cosmetic tools, cosmetic products, and combinations thereof. In embodiments, the substrate comprises a three-dimensional substrate. In embodiments, the substrate comprises medical devices such as catheters, thermometers, cardiac stents, programmable pace makers, other medical devices, menus, food packaging materials, cosmetic tools and products, and any other desired three-dimensional substrate. In further embodiments, the substrate comprises customizable digitally printed ID codes, short-run printable materials three-dimensional medical and any other desired three-dimensional substrate.

### EXAMPLES

### Example 1: Highly sulfonated polyester synthesis (7.5wt% sulfonation)

A 5 gallon Parr reactor equipped with a mechanical stirrer, distillation apparatus and bottom drain valve was charged with Dimethyl Terephthalate (3.492 Kg), Dimethyl -5-Sulfo-isophthalate sodium salt (940 g), 1,2-Propanediol (2.9 Kg), Diethylene glycol (449 g) and FASCAT 4100 (7.2 g). The mixture was heated under nitrogen flow (3 SCFH) to 120°C, after which stirring at 50 rpm was initiated. The mixture was then heated at 0.5 °C/ min for the next two hours until a temperature of 180°C was attained, during which the methanol byproduct was collected in the distillation receiver. The mixture was then heated at a rate of 0.25 °C per minute, until a temperature of 210 °C was attained, during which both methanol and excess 1, 2-propanediol was collected in the distillation receiver. Vacuum was then applied gradually until 4.4 mm-Hg was attained at 210°C over a 1 hour period. The mixture was then re-pressurized to atmospheric pressure with nitrogen, and the content was discharged through the bottom drain into a container. The product was then allowed to cool to room temperature overnight, followed by granulation using a fitz-mill. The product, displayed an onset glass transition temperature of 55.4 °C, number average molecular weight of 1,326 g / mole, a weight average molecular weight of 2,350 g/ mole, and a softening point of 135.9 °C.

### Examples 2 to 4: Formulation into DALI ink

Fluorescent pigments were added to a clear base of waterborne DALI inks in order to obtain the corresponding fluorescent inks.

**Fluorescent Inks**

| | **Example 2** | | **Example 3** | | **Example 4** | |
|---|---|---|---|---|---|---|
| | wt% | mass(g) | wt% | mass(g) | wt% | mass(g) |
| Water | 33.5% | 15 | 33.5% | 15 | 33.5% | 15 |
| Risk Reactor Clear Red PFLO-R | 7.3% | 3.25 | 0.0% | 0 | 0.0% | 0 |
| Risk Reactor Clear Green PFLO-G | 0.0% | 0 | 7.3% | 3.25 | 0.0% | 0 |
| Risk Reactor Clear Blue PFLO-B | 0.0% | 0 | 0.0% | 0 | 7.3% | 3.25 |
| Dynwet 800 | 3.4% | 1.5 | 3.4% | 1.5 | 3.4% | 1.5 |
| Sulfopolyester (BSPE) | 33.5% | 15 | 33.5% | 15 | 33.5% | 15 |
| Sulfolane | 11.2% | 5 | 11.2% | 5 | 11.2% | 5 |
| Nychem 1578x1 | 11.2% | 5 | 11.2% | 5 | 11.2% | 5 |
| TOTAL | 100.0% | 44.75 | 100.0% | 44.75 | 100.0% | 44.75 |

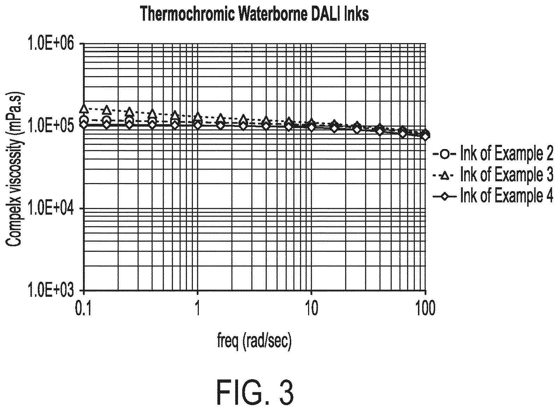

To a 100mL beaker fitted with a heating jacket and overhead mixer was added water, sulfolane and Dynwet 800. The solution was then sheared with a Cowles blade at 600 rpm and to the beaker was added a branch sulfonated polyester (BSPE), which was a sulfopolyester made by a similar method as in Example 1, the sulfopolyester having an onset glass transition temperature of about 55 °C, number average molecular weight of 1,818 g/mole, a weight average molecular weight of 3,315 g/mole, and a softening point of about 135 °C. Once the polyester had been completely dispersed (-10 min) at room temperature (about 23 °C), the vessel was heated to 85-90 °C for 10-15 min with continued shearing. The mixture was cooled to <50°C and the mixing to 350 rpm. At this point, the Risk Reactor Red PFLO-R pigment was powdered in. Following the addition of pigment, Nychem 1578x1 was added over ∼ 10 min, followed by an additional 10 min of mixing to furnish the final ink. The viscosity, prints and robustness data of the prepared inks are shown in FIGS. 3, 4 and 5, respectively.

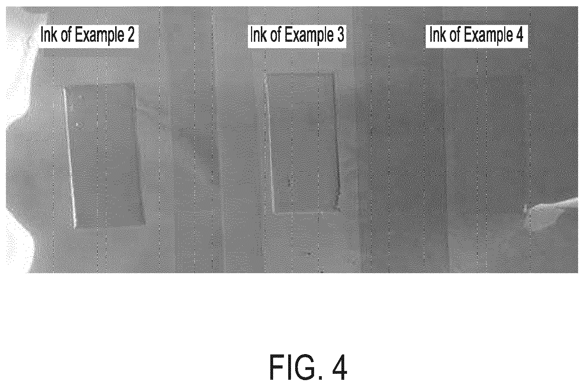

The fluorescent inks of Examples 2, 3 and 4 were tested by using a #2 Meyer coating rod to draw down the corresponding ink onto a sheet of transparency. The coatings were cured by placing them into an oven set at 100 °C for 5 minutes. FIG. 4 shows the draw down coatings of Examples 2 to 4. The inks can be formulated to be white, colored or clear. Example 2 is shown as a transparent white coating and Example 3 as a white coating, whereas Example 4 is a clear coating (apart from a difference in gloss).

### Example 5: Testing of Fluorescent Cyan DALI Inks Containing Polyurethane on Lithographic Print Fixture

The ink of Example 1 was tested in the DALI surrogate print testing fixture ('Mimico') to evaluate the efficiency of ink transfer from the blanket under typical lithographic print conditions. An anilox roll was filled with ink, transferred to the blanket, then offset pressed onto Sterling Gloss #80 paper, followed by a second and third offset event between fresh paper and the previously inked blanket to monitor the residual ink that may remain on the blanket ('chase sheet'). Prints were then cured in the oven at 100 °C for 5 min.

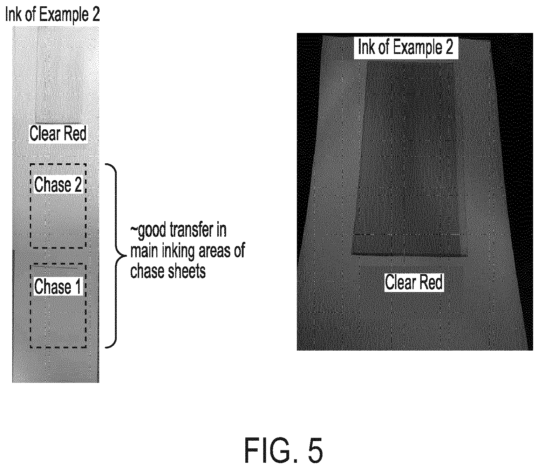

FIG. 5 shows the offset printing results for the ink of Example 2. Although hard to see due to the clear coating, the sample showed good ink transfer with no residue ink observed on the 'chase' sheet. The chase sheet sections of the print were probed with a UV lamp and no ink residue was detected. The black colour that appears in the print area is residue from the blanket. The printed sample providing good fluorescence when the print was exposed to UV light.

### Example 6: Testing of Photochromic Behaviour Upon Irradiation with UV Light

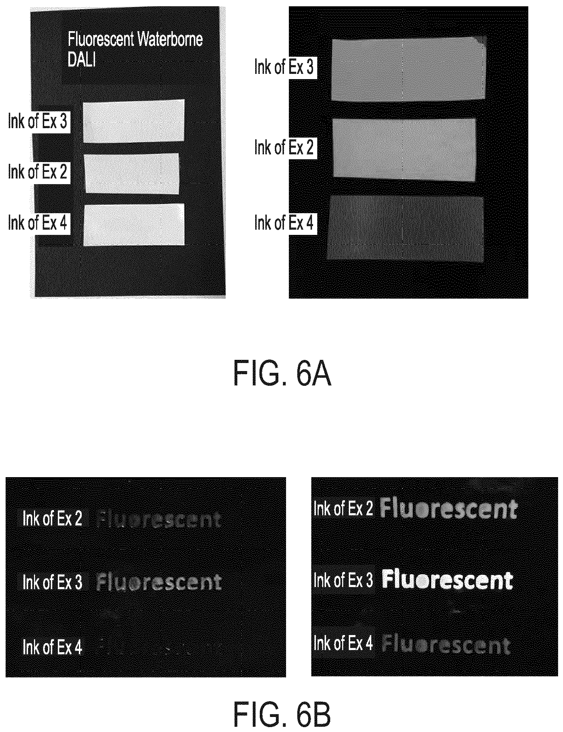

FIG. 6A shows the fluorescence of the ink of examples 2-4. Pieces from the Meyer rod coatings (Examples 2-4) performed on white Sterling Gloss #80 paper were cut out and fixed to a piece of black paper. The paper with the ink coatings was placed under a UV lamp emitting UVA. Strong fluorescence from each sample was observed. Upon removal of the light source, the coatings revert back to their clear form. This process can be repeated an indefinite amount of times. It also shows that the inks are invisible on white paper under standard conditions.

### Example 7: Robustness Testing

Dried prints on coated paper were subjected to preliminary robustness testing. The results are summarized as follows: a) Prints were robust to tape test, where scotch tape was applied with pressure to the print surface and removed cleanly; Prints were robust to a water swab test, where a cotton swab was dipped in water and rubbed with pressure across the print surface until the paper can be seen; prints were robust to an IPA swab test, where a cotton swab was dipped in IPA and rubbed with pressure across the print surface until the paper can be seen.

FIG. 6B once again shows the fluorescence of the ink of Examples 2 to 4. A template of the word fluorescent was laser cut from a transparency and each ink was drawn on black paper using a Meyer rod in order to obtain the image. It can once again be seen that Example 2 is a transparent white, example 3 a white and example 4 a clear coating. The images were then subjected to UVA radiation, under which, all inks fluoresced strongly. It can be seen that if not for the difference in gloss, the ink of Example 4 would be invisible under standard conditions. FIG. 6B: Left) Inks of Examples 2 to 4 coated onto a black waterborne DALI print. FIG. 6B: Right) The coating of each ink on the left irradiated with UVA (365 nm).

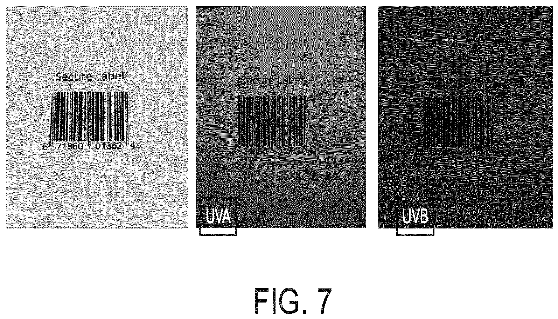

FIG. 7 shows fluorescent DALI inks in a potential security label application. The inks, with the exception of a gloss difference, are nearly invisible on white paper. Printing 'special information' on a label that can be seen when exposed to UV radiation is an effective security and anti-counterfeit method. The ink of Example 4 is clear and can be printed overtop of existing images and will only be visible during irradiation. FIG. 7 shows the inks are invisible under standard room conditions (left) and become visible under UVA (center) and UVB (right) radiation. Inks return to colourless state immediately after UV source is removed.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. All chemical concentrations and percentages described herein or on a by weight basis unless otherwise stated.

While the present teachings have been illustrated with respect to one or more implementations, alterations and/or modifications can be made to the illustrated examples without departing from the spirit and scope of the appended claims. In addition, while a particular feature of the present teachings may have been disclosed with respect to only one of several implementations, such a feature may be combined with one or more other features of the other implementations as may be desired and advantageous for any given or particular function. Furthermore, to the extent that the terms "including," "includes," "having," "has," "with," or variants thereof are used in either the detailed description and the claims, such terms are intended to be inclusive in a manner similar to the term "comprising." Further, in the discussion and claims herein, the term "about" indicates that the value listed may be somewhat altered, as long as the alteration does not result in nonconformance of the process or structure to the illustrated embodiment. Finally, "exemplary" indicates the description is used as an example, rather than implying that it is an ideal.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompasses by the following claims.

## Claims

1. An ink composition, comprising:
at least one water dissipatible sulfonated polyester;
at least one polymer additive;
at least one colorant chosen from a photochromic colorant and a fluorescent colorant;
at least one surfactant;
at least one humectant; and
water.

2. The composition of claim 1, wherein the sulfonated polyester has a degree of sulfonation of from about 3 mole percent to about 15 mole percent.

3. The composition of claim 1, wherein the sulfonated polyester comprises a terephthalate-diol unit, a sulfonated terephthalate-diol unit and an crosslinker unit having the following structures: 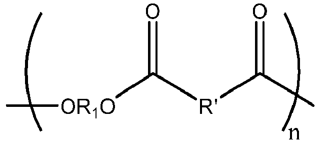 terephthalate-diol unit 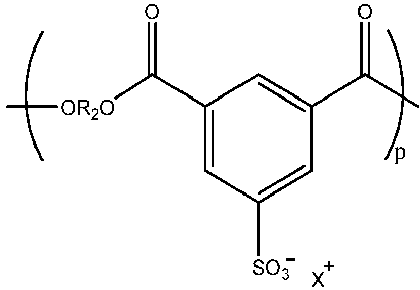 sulfonated terephthalate-diol unit 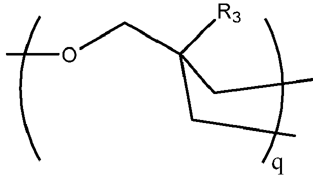 crosslinker unit wherein:
each R₁ and each R₂ is independently an alkylene of from 2 to about 25 carbon atoms;
each R₃ is independently a branched or unbranched alkyl group of from 1 to 15 carbon atoms;
each R' is independently an arylene of from about 6 to about 36 carbon atoms;
each X⁺ is independently Na⁺, Li+, or K+;
n is from about 80 to about 95 mole percent;
p is from about 5 to about 15 mole percent; and
q is from about 0.1 to about 4 mole percent.

4. The composition of claim 1, wherein the sulfonated polyester is present in the ink composition in an amount of from about 10 to about 60 percent by weight based upon the total weight of the ink composition.

5. The composition of claim 1, wherein the sulfonated polyester is a dispersion having particle sizes of about 55 nm to about 1 nm, as measured by Malvern Zetasizer (Dynamic Light Scattering (DLS)).

6. The composition of claim 1, wherein the polymer additive comprises a compound selected from the group consisting of styrene-butadiene, acrylonitrile-butadiene, acrylonitrile-butadiene-styrene, styrene-acrylic and combinations thereof.

7. The composition of claim 1, wherein the polymer additive is a latex comprising a compound selected from the group consisting of acrylonitrile-butadiene, acrylonitrile-butadiene-styrene, styrene-acrylic and combinations thereof.

8. The composition of claim 1, wherein the at least one colorant is a photochromic colorant, the photochromic colorant comprising a compound selected from the group consisting of spiropyrans, spiroxazines, stilbenes, aromatic azobenzenes, chromenes, bisimidazoles, spirodihydroindolizines, quinines, perimidinespirocyclohexadienones, viologens, fulgides, diarylethenes, triarylmethanes, anils and combinations thereof.

9. The composition of claim 1, wherein the at least one surfactant is chosen from ionic surfactants, anionic surfactants, cationic surfactants, nonionic surfactants, zwitterionic surfactants and mixtures thereof.

10. The composition of claim 1, wherein the at least one surfactant is chosen from an alcohol alkoxylate, di-alkyl sulfosuccinate, alkyl sulfate, alky ether sulfate, sulfo-carboxylic compound, ethoxylated alkyl phenols and combinations thereof.

11. The composition of claim 1, wherein the humectant is an organic compound having a boiling point higher than water at atmospheric pressure.

12. The composition of claim 1, wherein the humectant is at least one compound chosen from alcohols, glycol ethers, polyglycol ethers, ethylene glycol alkyl ethers, propylene glycol alkyl ethers, polyethylene glycol alkyl ethers, amides, carboxylic acids and salts thereof, esters, organosulfides, organosulfoxides, sulfones, ethers, hydroxyethers, amino alcohols, ketones, amides, sulfoxides, lactones, polyelectrolytes, sugars, substituted and unsubstituted formamides, substituted and unsubstituted acetamides, and mixtures thereof.

13. The composition of claim 1, wherein the humectant comprises a compound selected from the group consisting of sulfolane, aliphatic alcohols, aromatic alcohols, diols, primary aliphatic alcohols, secondary aliphatic alcohols, 1,2-alcohols, 1,3-alcohols, 1,5-alcohols, methoxylated glycerol, ethoxylated glycerol, methyl ethyl ketone, isopropanol, 2-pyrrolidinone, polyethylene glycol, ethylene glycol, propylene glycol, diethylene glycols, glycerine, dipropylene glycols, polyethylene glycols, polypropylene glycols, trimethylolpropane, 1,5-pentanediol, 2-methyl-1,3,-propanediol, 2-ethyl-2-hydroxymethyl-1,3-propanediol, 3-methoxybutanol, 3-methyl-1,5-pentanediol, 1,3-propanediol, 1,4-butanediol, 2,4-heptanediol, urea, substituted ureas, thiourea, ethylene urea, alkylurea, alkylthiourea, dialkylurea, dialkylthiourea, 2-methylpentanoic acid, 2-ethyl-3- propylacrylic acid, 2- ethyl-hexanoic acid, 3-ethoxyproponic acid, cellusolve, tripropylene glycol monomethyl ether, N-methylpyrrolidone, 2-pyrrolidinone, cyclohexylpyrrolidone, methyl sulfonylethanol, imidazole, 1,3-dimethyl-2-imidazolidinone, betaine, 1-deoxy-D-galactitol, mannitol, inositol, carbitol, butyl carbitol, and mixtures thereof.

14. The composition of claim 1, wherein the water makes up about 50% to about 70% by weight of the composition.

15. The composition of claim 1, further comprising one or more optional ingredients chosen from dyes, pigments and combinations thereof.

16. A method for digital offset printing, comprising:
applying a dampening fluid layer to an imaging member surface;
patterning the dampening fluid layer to selectively form a latent image;
developing the latent image to form an ink image by applying an ink composition over the latent image; and
transferring the ink image to a printable substrate,
the ink composition comprising:
at least one water dissipatible sulfonated polyester;
at least one polymer additive;
at least one colorant chosen from a photochromic colorant and a fluorescent colorant;
at least one surfactant;
at least one humectant; and
water.

17. The method of claim 16, further comprising modifying the rheology of the ink image on the imaging member surface without the use of a UV lamp.

18. The method of claim 16, wherein the printable substrate is a label or packaging.

19. The method of claim 16, wherein the sulfonated polyester comprises a terephthalate-diol unit, a sulfonated terephthalate-diol unit and an crosslinker unit having the following structures: 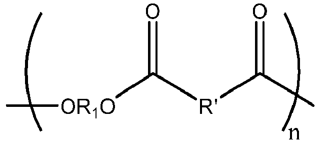 terephthalate-diol unit 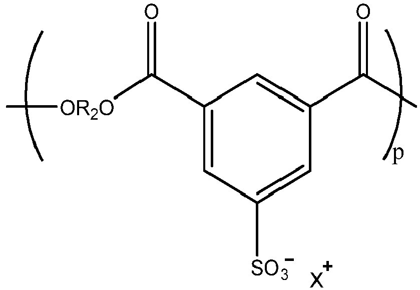 sulfonated terephthalate-diol unit 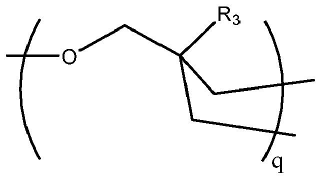 crosslinker unit wherein:
each R₁ and each R₂ is independently an alkylene of from 2 to about 25 carbon atoms;
each R₃ is independently a branched or unbranched alkyl group of from 1 to 15 carbon atoms;
each R' is independently an arylene of from about 6 to about 36 carbon atoms;
each X⁺ is independently Na⁺, Li+, or K+;
n is from about 80 to about 95 mole percent;
p is from about 5 to about 15 mole percent; and
q is from about 0.1 to about 4 mole percent.

20. The method of claim 16, wherein the at least one colorant is a photochromic colorant, the photochromic colorant comprising a compound selected from the group consisting of spiropyrans, spiroxazines, stilbenes, aromatic azobenzenes, chromenes, bisimidazoles, spirodihydroindolizines, quinines, perimidinespirocyclohexadienones, viologens, fulgides, diarylethenes, triarylmethanes, anils and combinations thereof.
